# EUROPÄISCHE PATENTANMELDUNG

(11) **EP 2 774 793 A1**
(43) Veröffentlichungstag der Anmeldung: **10.09.2014**
(21) Anmeldenummer: 13001072.1
(22) Anmeldetag: 04.03.2013
(51) Int. Cl.: B60J 7/043, B60J 7/19

(54) **Fahrzeug-Schiebedachvorrichtung**

(71) Anmelder: Webasto SE, 82131 Stockdorf (DE)
(72) Erfinder: Inzerillo, Gioacchino, 10036 Settimo Torinese (TO) (IT); Marrocco, Pasquale, 10040 Rivalta di Torino (IT)
(74) Vertreter: Fischer & Konnerth

(57) **Zusammenfassung**

Die Erfindung betrifft eine Fahrzeug-Schlebedachvorrichtung (3) mit einer Deckeleinheit (5), die mittels einer Lagereinrichtung (7, 8) an Führungen (9, 10) der Schiebedachvorrichtung (3) verschiebbar gelagert und zwischen einer eine Dachöffnung (11) abdeckenden Schließstellung und zumindest einer Offenstellung verstellbar ist, wobei erfindungsgemäß vorgesehen ist, dass mittels einer manuell zu bedienenden Betätigungseinrichtung (33) eine Verriegelungseinrichtung (31), die die Deckeleinheit (5) zumindest in ihrer Schließstellung lösbar verriegelt, und eine Rasteinrichtung (32) betätigbar ist, mittels der die Deckeleinheit (5) zumindest in unterschiedlichen Öffnungsstellungen gegen Verschieben relativ zu den Führungen (9, 10) rastbar ist.

## Beschreibung

Die Erfindung betrifft eine Fahrzeug-Schiebedachvorrichtung mit einer Deckeleinheit, die mittels einer Lagereinrichtung an Führungen verschiebbar gelagert und zwischen einer eine Dachöffnung abdeckenden Schließstellung und zumindest einer Offenstellung verstellbar ist.

Aus der DE 1 580 603 B ist eine gattungsgemäße Fahrzeug-Schiebedachvorrichtung bekannt geworden, deren Schiebedachdeckel durch manuelles Verschieben mittels eines Handgriffs zwischen einer Schließstellung und unterschiedlichen Öffnungsstellungen verstellbar ist. Mittels des Handgriffs sind zwei Betätigungsstangen verstellbar, die sich zu den beiden Seitenrändem des Schiebedachdeckels erstrecken und dort zwei Reibelemente verstellen, die im Bereich seitlicher Führungen des Schiebedachdeckels in Reibeingriff den Schiebedachdeckel in seiner jeweiligen Stellung festlegen können. Ein solcher Reibeingriff stellt keine sichere Blockierung des Schiebedachdeckels über längere Betriebszeit insbesondere in einem Crashfall bereit.

Der Erfindung liegt die Aufgabe zugrunde, eine eingangs genannte Fahrzeug-Schiebedachvorrichtung zu schaffen, die hinsichtlich der Verstellung einer bewegbaren Deckeleinheit und ihrer Festlegung in unterschiedlichen Stellungen verbessert ist.

Diese Aufgabe wird bei der eingangs genannten Fahrzeug-Schiebedachvorrichtung erfindungsgemäß dadurch gelöst, dass mittels einer manuell zu bedienenden Betätigungseinrichtung eine Verriegelungseinrichtung, die die Deckeleinheit zumindest in ihrer Schließstellung lösbar verriegelt, und eine Rasteinrichtung betätigbar ist, mittels der die Deckeleinheit zumindest in unterschiediichen Öffnungsstellungen relativ zu den Führungen gegen Verschieben rastbar ist.

Vorteilhafte Ausgestaltungen der Erfindung sind in den abhängigen Ansprüchen angegeben.

Die manuell zu bedienende Betätigungseinrichtung ermöglicht insbesondere in Einhandbedienung das Verriegeln der verschiebbaren Deckeleinheit mittels der Verriegelungseinrichtung in Schließstellung sowie eine rastende Festlegung der Deckeleinheit in bestimmten Schiebe- oder Raststellungen. Die Raststellungen beinhalten zweckmäßigerweise einen formschlüssigen Rasteingriff der Rasteinrichtung, wodurch große Haltekräfte gegen Verschieben der Deckeleinheit zwischen der Deckeleinheit und einem feststehenden Dachbauteil übertragen werden können. Damit kann eine in einer Öffnungsstellung angeordnete Deckeleinheit auch im Falle eines Unfalls, bei dem hohe Beschleunigungskräfte auf die Deckeleinheit wirken und diese entlang der Führungen verschieben möchten, zumindest nach kurzem Bewegungsweg verrastet und blockiert werden.

Eine solche Sicherung bieten z. B. die aus dem Stand der Technik bekannten Reibelemente zum Festlegen der Deckeleinheit nicht, da die aufbringbare Reibkraft durch Alterung wie auch durch Umwelteinflüsse, z. B. Feuchtigkeit, unzureichend sein kann.

Die Betätigungseinrichtung für die Verriegelungseinrichtung wie auch die Rasteinrichtung eignet sich grundsätzlich für Deckeleinheiten, die manuell verschiebbar sind oder auch mittels einer Antriebseinrichtung bewegbar sind. Als Deckeleinheit wird jegliche Baueinheit eines Schiebedaches verstanden, die mit einem flächigen Verschlusselement wie einem Deckel oder einem Panel eine Dachöffnung verschließen kann.

Das feststehende Dachbauteil, an dem die Rasteinrichtung einen Rasteingriff bilden kann, ist z. B. eine Dachrahmenstruktur, an der die Führungen der Deckeleinheit angebracht sind, oder ein Schiebedachrahmen der Schiebedachvorrichtung, die als Baueinheit oder Schiebedachmodul mittels dieses Schiebedachrahmens an der Dachrahmenstruktur angebracht ist, oder ein Teil der Führungen.

Bei der erfindungsgemäßen Schiebedachvorrichtung kann daher zweckmäßigerweise die entlang der Führungen insbesondere manuell bewegte Deckeleinheit entweder durch Rasteingriff der sich in Bereitschaftsstellung befindenden Rasteinrichtung festgelegt werden oder sie ist aufgrund der durch manuelle Betätigung inaktiv gehaltenen Rasteinrichtung frei verschiebbar. Damit kann ein zügiges Öffnen oder Schließen der Schiebedacheinheit ohne Zwischenverrastung ausgeführt werden.

In bevorzugter Gestaltung ist vorgesehen, dass die Betätigungseinrichtung an der Deckeleinheit angeordnet ist und einen verstellbar und insbesondere schwenkbar gelagerten Handgriff oder dergleichen aufweist, der in seiner Ruhestellung, in der er bevorzugt in eine horizontale Stellung gegen die Unterseite der Deckeleinheit eingeschwenkt ist, zumindest einen Riegel oder Riegelhaken der Verriegelungseinrichtung in Riegelstellung an einem Riegeleingriffsteil hält und in seiner Betätigungsstellung, in der es insbesondere aus der horizontalen Stellung nach unten ausgeschwenkt ist, den Riegel oder Riegelhaken aus seiner Verriegelung gelöst hat. Das Riegeleingriffsteil ist feststehend angebracht, z. B. an einem wie oben beschriebenen Dachbauteil.

Zweckmäßigerweise enthält die Rasteinrichtung zumindest ein Rastglied, das an der Deckeleinheit bewegbar gelagert und am Seitenrand der Deckeleinheit an zumindest einem am Schiebedachrahmen angeordneten Rasteingriffsteil durch Vorspannung in Rasteingriff verstellbar und insbesondere ausfahrbar ist. Das Rastglied kann zu seiner Verstellung in Schiebe- oder Schwenkbewegung geführt sein und es kann seitlich in der Ebene der Deckeleinheit oder auch senkrecht hierzu bewegbar sein.

Das Rastglied kann von der Betätigungseinrichtung mittels einer insbesondere einen Bowdenzug aufweisenden Verstelleinheit in eine inaktive Rückzugsstellung verstellbar sein, in der bei der Verschiebung der Deckeleinheit mit dem Rasteingriffsteil nicht in Eingriff kommen kann. Ein Bowdenzug als Übertragungsmittel einer Verstellbewegung kann in einfacher Weise an die baulichen Gegebenheiten angepasst werden. Jedoch eignen sich auch andere mechanische Übertragungsmittel wie Lenker und Hebel oder dergleichen.

Die Verstelleinheit bzw. der Bowdenzug kann eine Feder wie z. B. eine wendelförmige Zug-Druck-Feder enthalten, die insbesondere zum Toleranzausgleich innerhalb der Verstelleinheit vorgesehen ist.

Die Rasteinrichtung bzw. die Verstelleinheit ist bevorzugt von einem Rastbetätigungsteil der Betätigungseinrichtung, das z. B. ein Schieber oder Schiebetaster oder auch ein schwenkbar gelagertes Teil ist, bedienbar, wobei das Rastbetätigungsteil bevorzugt zur Einhandbedienung beim manuellen Verschieben der Deckeleinheit vorgesehen ist und daher benachbart zum Handgriff oder in Handreichweite zur gleichzeitigen Bedienung angeordnet ist.

Für eine einfache Funktionsweise ist vorgesehen, dass das Rastglied in einer Bereitschaftsstellung bei bewegter Deckeleinheit von einer Rastschräge am jeweiligen Rasteingriffsteil gegen eine Vorspannkraft einfahrbar ist und durch die Vorspannkraft in Rasteingriff am jeweiligen Rasteingriffsteil ausfahrbar ist.

Zweckmäßigerweise ist das Rastglied oder ein Rastgliedhalter mittels einer von der Betätigungseinrichtung verstellbaren Rastverstellmechanik, insbesondere durch Verschwenken des Handgriffs, einerseits in eine vollständig ausgefahrene Raststellung ausfahrbar und andererseits zur Bewegung in eine eingefahrene Bereitschaftsstellung freigebbar. In der Bereitschaftsstellung ist das Rastglied in einer solchen Stellung oder steht soweit von der Deckeleinheit hervor, dass es sich an die jeweilige Rastschräge anlegen kann und von dieser verstellt werden kann.

Des weiteren kann eine Stellstange der Rastverstellmechanik vorgesehen sein, die den verstellbaren Riegel oder Riegelhaken mit dem Rastglied bzw. dem Rastgliedhalter koppelt. Über die Stellstange kann das Rastglied bzw. der Rastgliedhalter zusätzlich gesteuert oder verstellt werden. Durch die Anbindung an den Riegel oder Riegelhaken ist eine eigene Betätigung nicht erforderlich. Zweckmäßigerweise ist die Stellstange an einer Kulisse oder an einem Langloch des Rastgliedhalters gelagert, so dass sie in der Bereitschaftsstellung des Rastgliedes oder Rastgliedhalters eine durch die Kulisse bzw. das Langloch begrenzte Verstellbewegung des Rastgliedhalters zulässt. Die Kulisse bzw. das Langloch sind beispielhaft genannt, jedoch kann die Funktion auch durch andere Mittel bereitgestellt werden. Die Stellstange ermöglicht z. B. das manuell betätigte Ausfahren des Rastgliedes in ein Rasteingriffsteil in einer Zwischen- oder Endstellung der Deckeleinheit, in der die Dachöffnung geschlossen, teilweise freigelegt oder gänzlich geöffnet ist.

Die Verriegelungseinrichtung und die Rasteinrichtung sowie die Betätigungseinrichtung können eine Baugruppe bilden, die an der Deckeleinheit oder an einem Deckel der Deckeleinheit angeordnet sein kann. Eine Montage wird erleichtert, wenn die Baugruppe eine Tragstruktur aufweist, die an der Unterseite der Deckeleinheit oder des Deckels, insbesondere nahe des Vorderrandes des Deckels, angebracht werden kann, beispielsweise durch Verschraubung oder durch Verklebung.

Eine bevorzugte Gestaltung sieht vor, dass die Deckeleinheit einen Deckelrahmen aufweist, der an den Führungen der Schiebedachvorrichtung bzw. der Deckeleinheit gelagert ist und an dem der Deckel mit der daran angebrachten Baugruppe zum Freigeben einer Dach- oder Deckelrahmenöffnung lösbar angebracht ist. Damit kann in einfacher Weise eine Dachöffnung großflächig freigelegt werden, die ansonsten von einem Teil des verschobenen Deckels, insbesondere der vordere Teil mit der Betätigungseinrichtung, auch in seiner Offenstellung abgedeckt ist.

Nachfolgend wird die Erfindung anhand eines Ausführungsbeispiels einer erfindungsgemäßen Fahrzeug-Schiebedachvorrichtung unter Bezugnahme auf die Zeichnung näher erläutert. Es zeigt:
- Fig. 1: in einer isometrischen Draufsicht ein Fahrzeugdach mit einer Schiebedachvorrichtung, deren Deckeleinheit in eine Teilöffnungsstellung bewegt ist;
- Fig. 2: in einer isometrischen Draufsicht die Deckeleinheit in der Stellung der Fig. 1 mit ihrer Lagerung an seitlichen vorderen und hinteren Führungsschienen;
- Fig. 3: in einer isometrischen Draufsicht gemäß Fig. 2 einen Deckelrahmen der Deckeleinheit mit seiner Lagerung an den seitlichen vorderen und hinteren Führungsschienen;
- Fig. 4: in einer isometrischen Draufsicht in Explosionsdarstellung die Schiebedachvorrichtung;

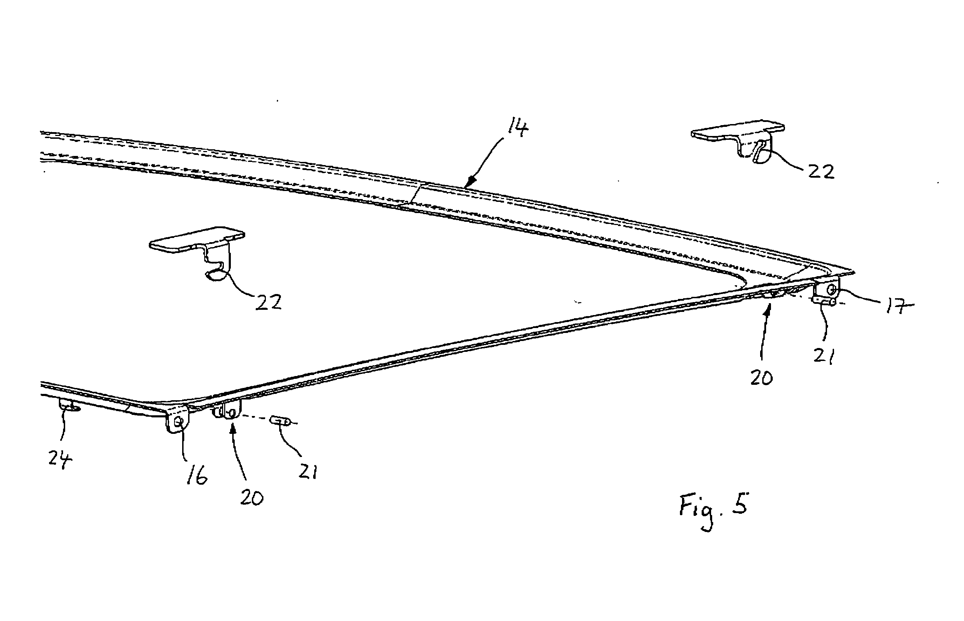

- Fig. 5: in einer isometrischen Draufsicht in Explosionsdarstellung einen linksseitigen Abschnitt des Deckelrahmens mit zwei Deckelhalterungen und zugeordneten rahmenseitigen Haltestiften;
- Fig. 6: in einer isometrischen Draufsicht eine Unterseite der Schiebedachvorrichtung, wobei die eine Betätigungseinrichtung aufweisende Deckeleinheit in Schließstellung angeordnet ist;
- Fig. 7: in einer isometrischen Draufsicht eine Unterseite der Betätigungseinrichtung;
- Fig. 8: in einer isometrischen Draufsicht die Oberseite der Betätigungseinrichtung mit einer Verriegelungseinrichtung und einer Rasteinrichtung;
- Fig. 9: in einer isometrischen Draufsicht gemäß Fig. 6 die Schiebedachvorrichtung, wobei die Betätigungseinrichtung bei geschlossener Deckeleinheit die Verriegelungseinrichtung entriegelt und die Rasteinrichtung in eine Bereitschaftsstellung verstellt hat;
- Fig. 10: in einer isometrischen Draufsicht gemäß Fig. 9 die Schiebedachvorrichtung, wobei die Deckeleinheit in eine hintere Offenstellung verschoben ist;
- Fig. 11: in einer isometrischen Draufsicht gemäß Fig. 10 die Schiebedachvorrichtung, wobei die Deckeleinheit in der hinteren Offenstellung mittels der Betätigungseinrichtung verriegelt ist;
- Fig. 12: in einer Draufsicht ein linker Endabschnitt der in Fig. 8 dargestellten Betätigungseinrichtung mit der Rasteinrichtung in einer ausgefahrenen Raststellung;
- Fig. 13: in einer Schnittansicht entlang der Linie A - A in Fig. 12 die Rasteinrichtung;
- Fig. 14: in einer Draufsicht gemäß Fig. 12 die Betätigungseinrichtung mit der Rasteinrichtung in einer Bereitschaftsstellung gemäß Fig. 9;
- Fig. 15: in einer Schnittansicht entlang der Linie B - B in Fig. 14 die Rasteinrichtung;
- Fig. 16: in einer Draufsicht gemäß Fig. 12 die Betätigungseinrichtung mit der Rasteinrichtung in einer Rückzugsstellung;
- Fig. 17: in einer Schnittansicht entlang der Linie C - C in Fig. 16 die Rasteinrichtung;
- Fig. 18: in einer isometrischen Draufsicht gemäß Fig. 6 die Schiebedachvorrichtung mit einem in Schließstellung angeordneten Deckelrahmen der Deckeleinheit, von dem der am Deckelrahmen lösbar anbringbare Deckel entnommen worden ist; und

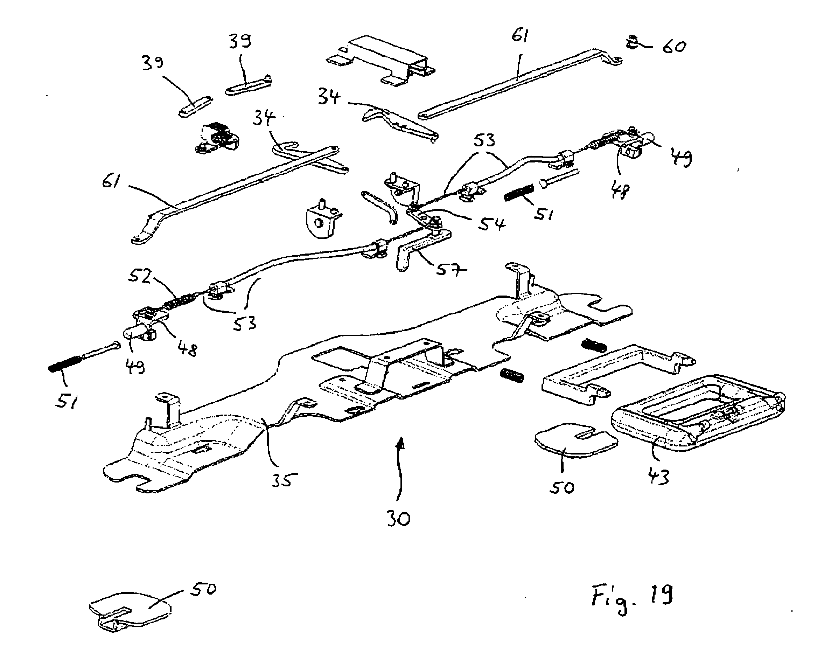

- Fig. 19: in einer isometrischen Draufsicht in Explosionsdarstellung die in Fig. 8 dargestellte Baugruppe.

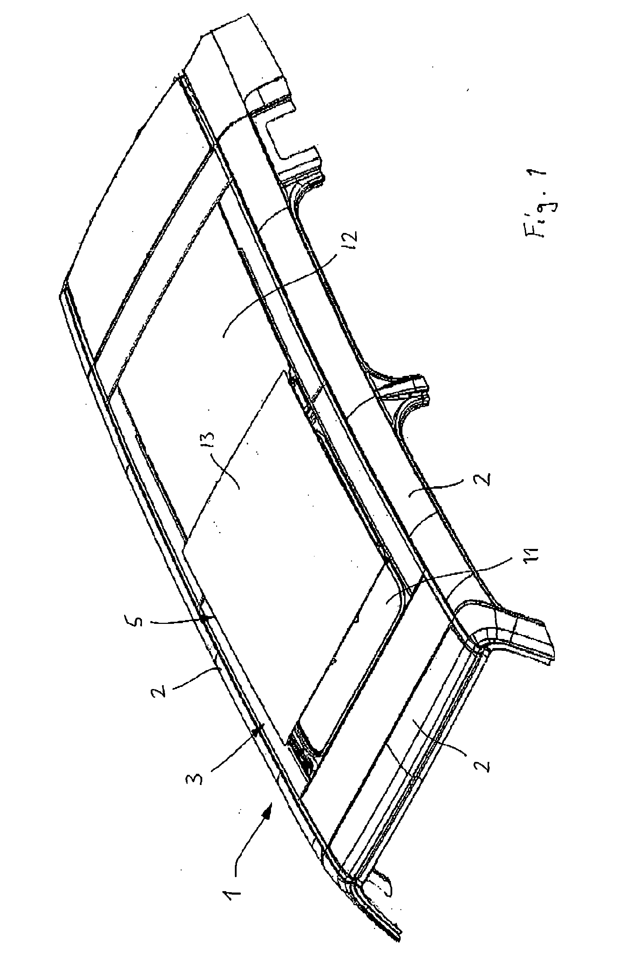

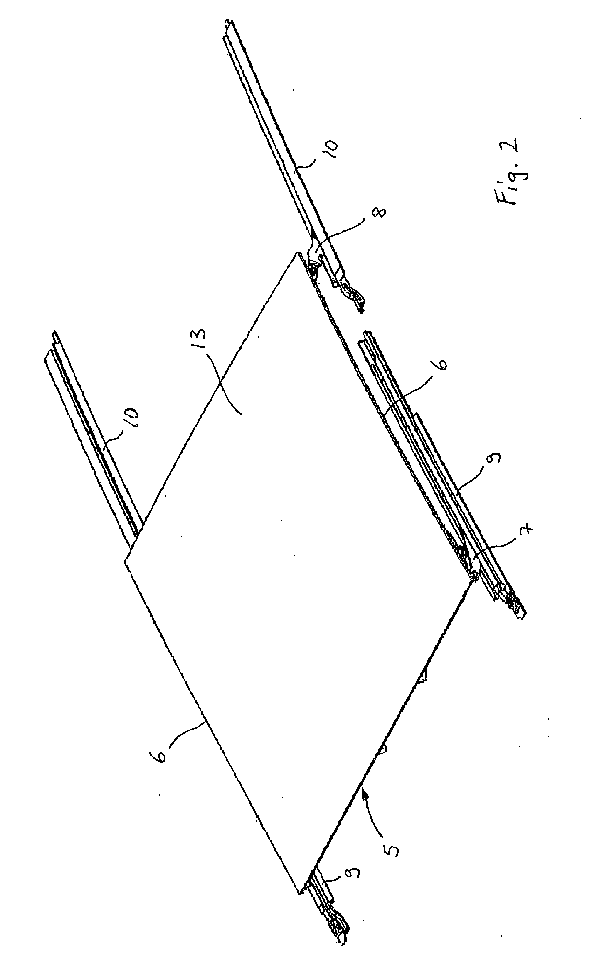

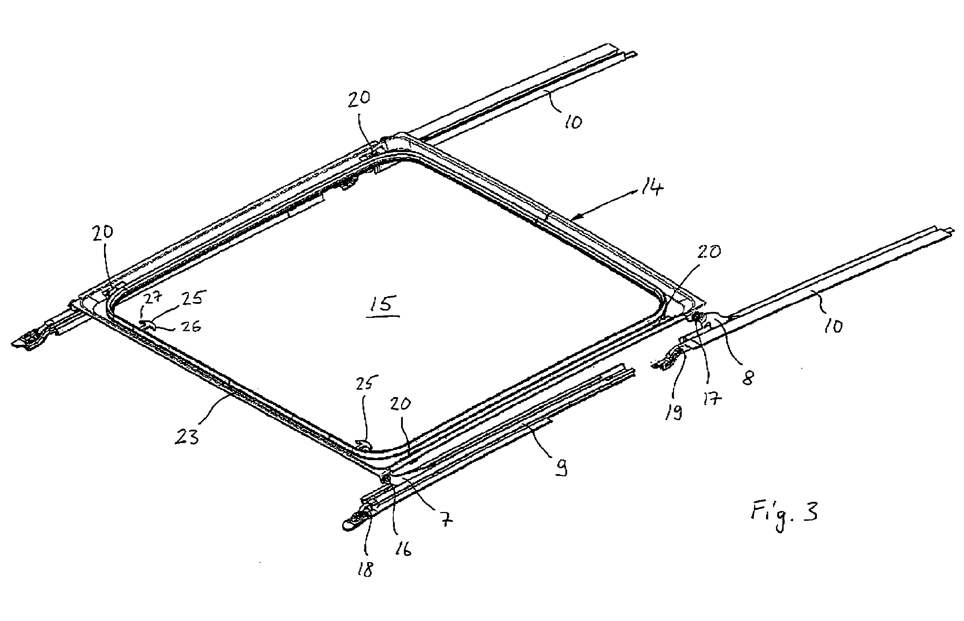

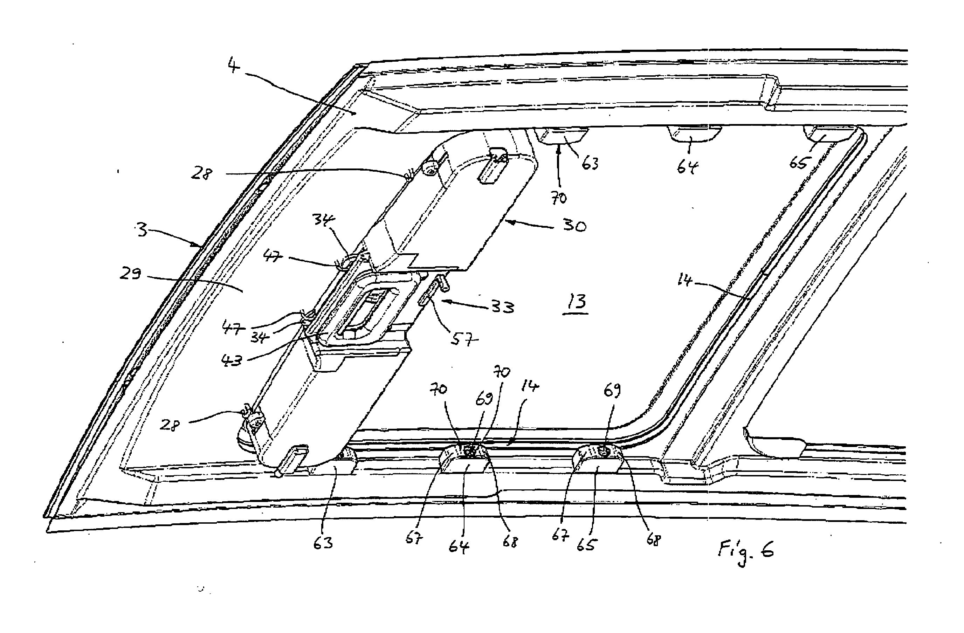

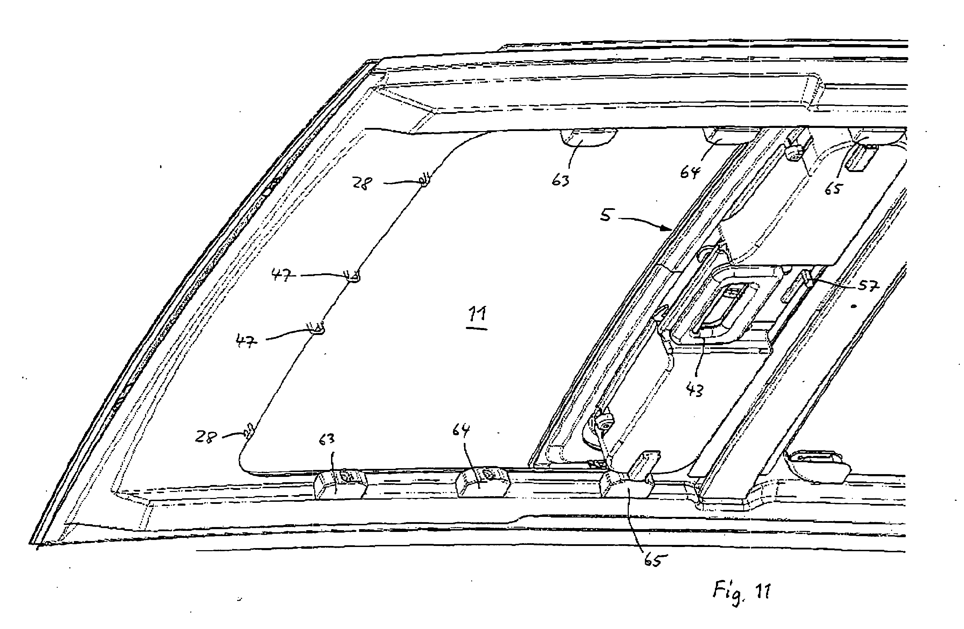

Ein Fahrzeug wie z. B. ein Personenkraftwagen umfasst ein Fahrzeugdach 1 (siehe Fig. 1) mit einer festen Dachrahmenstruktur 2 und einer Schiebedachvorrichtung 3, die als Baueinheit mittels eines Schiebedachrahmens 4 (siehe Fig. 6) an der Dachrahmenstruktur 2 angebracht ist. Die Schiebedachvorrichtung 3 enthält eine bewegbare Deckeleinheit 5, die im Bereich ihrer beiden Seitenränder 6 jeweils mittels eines vorderen Lager- und Ausstellhebels 7 und eines hinteren Lager- und Ausstellhebels 8 an einer vorderen Führungsschiene 9 bzw. einer hinteren Führungsschiene 10 verschiebbar gelagert ist (siehe insb. Fig. 2 bis 4). Die Deckeleinheit 5 ist zwischen einer Schließstellung, in der eine freilegbare Dachöffnung 11 verschlossen ist (Fig. 6), und einer Offenstellung mit maximal geöffneter Dachöffnung 11 (Fig. 11) verschiebbar, wobei bei einer Verlagerung in Zwischenstellungen mit teilweise freigelegter Dachöffnung 11 wie auch in Offenstellung die Lager- und Ausstellhebel 7 und 8 die Deckeleinheit 5 anheben und über ein sich an die Dachöffnung 11 bzw. die geschlossenen Deckeleinheit 5 nach hinten anschließendes hinteres Dachflächenteil 12 verlagern. Dieses Dachflächenteil 12 kann z. B. ein Teil eines festen Daches, eine eingesetzte feste Abdeckung oder auch ein weiterer bewegbarer Deckel sein. Das Verschieben der Deckeleinheit 5 entlang der Führungsschienen 9 und 10 erfolgt manuell, kann grundsätzlich aber auch mittels einer Antriebseinrichtung ausgeführt werden.

Die in der Beschreibung verwendeten Achsen- und Richtungsbezeichnungen wie z. B. "vorne", "hinten", "seitlich", "oben" und "unten" beziehen sich auf ein dreidimensionales x-y-z Fahrzeug-Koordinatensystem. Das Ausführungsbeispiel zeigt eine Schiebedachvorrichtung mit einer in Fahrzeuglängsrichtung oder x-Richtung bzw. in Dachlängsrichtung verlagerbaren Deckeleinheit 5. Grundsätzlich kann jedoch eine erfindungsgemäße Schiebedachvorrichtung auch mit einer z. B. in Fahrzeugquerrichtung oder y-Richtung bzw. in Dachquerrichtung bewegbar angeordneten Deckeleinheit vorgesehen sein.

Die Deckeleinheit 5 umfasst einen Deckel 13, z. B. einen Glasdeckel oder einen Kunststoffdeckel, und einen Deckelrahmen 14, an dem der Deckel 13 lösbar angebracht ist. Der Deckelrahmen 14 verläuft umlaufend unter dem Randbereich des Deckels 13 und ist somit im Ausführungsbeispiel entsprechend der Form des Deckels ein im wesentlichen rechteckiges Bauteil mit einer großen Deckelrahmenöffnung 15. Die vorderen und hinteren Lager- und Ausstellhebel 7 und 8 sind am Deckelrahmen 14 in vorderen und hinteren Schwenklagern 16 bzw. 17 schwenkbar angelenkt und mittels Führungs- und Steuerkulissen 18 und 19 der Führungsschienen 9 bzw. 10 anhebbar bzw. absenkbar und daran längs verfahrbar.

Der Deckelrahmen 14 weist vier Halterungen 20 mit jeweiligen Lagerstiften 21 auf, denen Haken 22 zugeordnet sind, die an der Unterseite des Deckels 13 angebracht sind und nach unten vorstehen. Der Deckel 13 wird an dem Deckelrahmen 14 lösbar angebracht, indem er mit den beiden vorderen Haken 22 an den vorderen Lagerstiften 21 und mit den hinteren Haken 22 an den hinteren Lagerstiften 21 eingehängt wird.

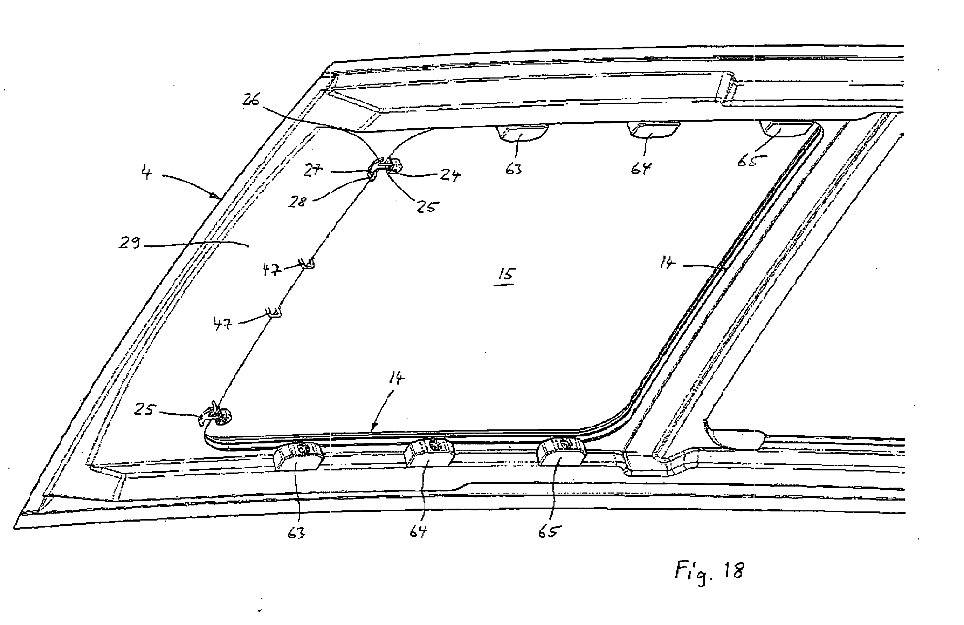

Der Deckelrahmen 14 enthält an seinem vorderen Deckelrahmenquerteil 23 zwei Lagerungen oder Lagerzapfen 24, die insbesondere nach unten vorstehen und jeweils ein Riegelteil 25 schwenkbar lagern. Jedes Riegelteil 25 ist ankerförmig mit zwei sich gegenüber liegenden Riegelhaken 26 und 27 gebildet und kann derart um den Lagerzapfen 24 verschwenkt werden, dass in einer ersten Riegelstellung der Riegelhaken 26 mit einem Eingriffsteil (nicht dargestellt, z. B. ein Zapfen oder ein Stift) des Deckels 13 in Eingriff ist und den Deckel 13 am Deckelrahmen 14 gesichert hält (siehe z. B. Fig. 6). Das Riegelteil 25 ist aus dieser ersten Riegelstellung in entgegen gesetzter Richtung in eine zweite Riegelstellung z. B. manuell verschwenkbar (siehe Fig. 18), in der der Riegelhaken 27 an einem Eingriffsteil 28 in Eingriff gebracht ist, das an einem vorderen Rahmenquerteil 29 des Schiebedachrahmens 4 angeordnet ist. In dieser zweiten Riegelstellung verriegelt somit das Riegeltell 25 den Deckelrahmen 14 in Schließstellung am Schlebedachrahmen 4 und löst gleichzeitig die Verriegelung des Deckels 13 am Deckelrahmen 14, so dass der Deckel 13 vom gesicherten nicht verschiebbaren Deckelrahmen 14 entnommen werden kann und die Deckelrahmenöffnung 15 die freigelegte Dachöffnung 11 bildet.

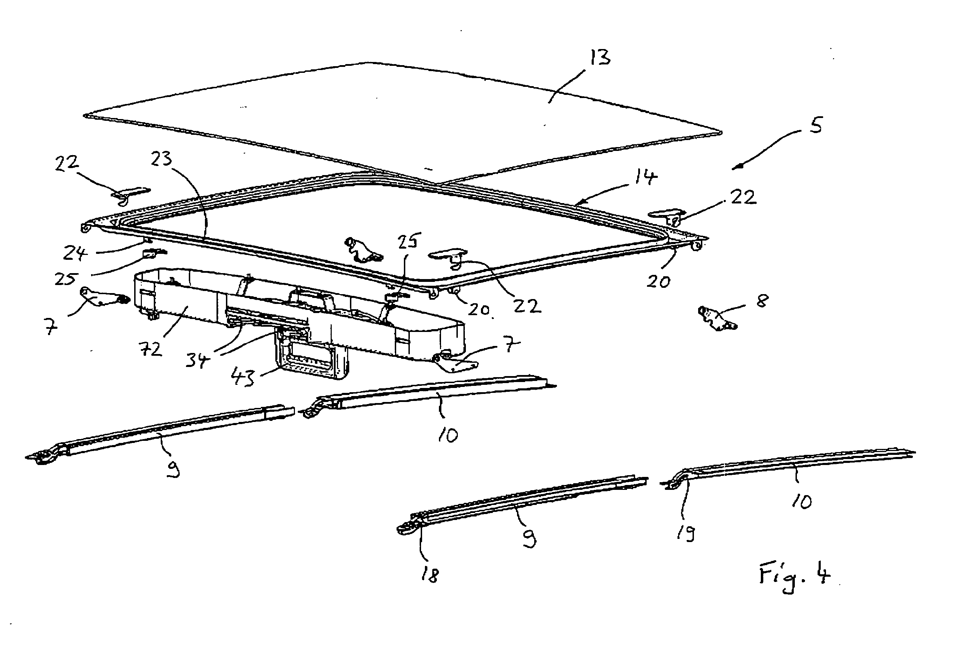

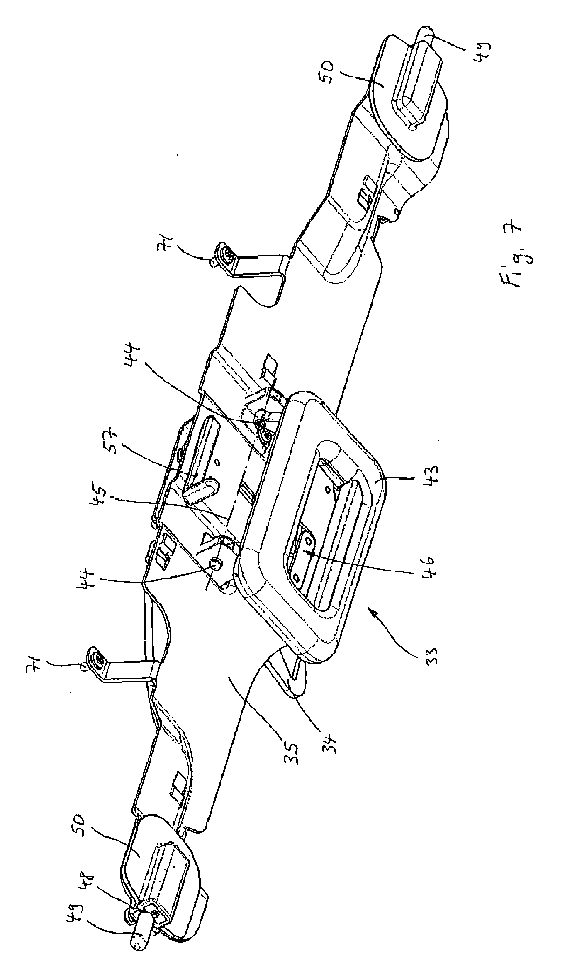

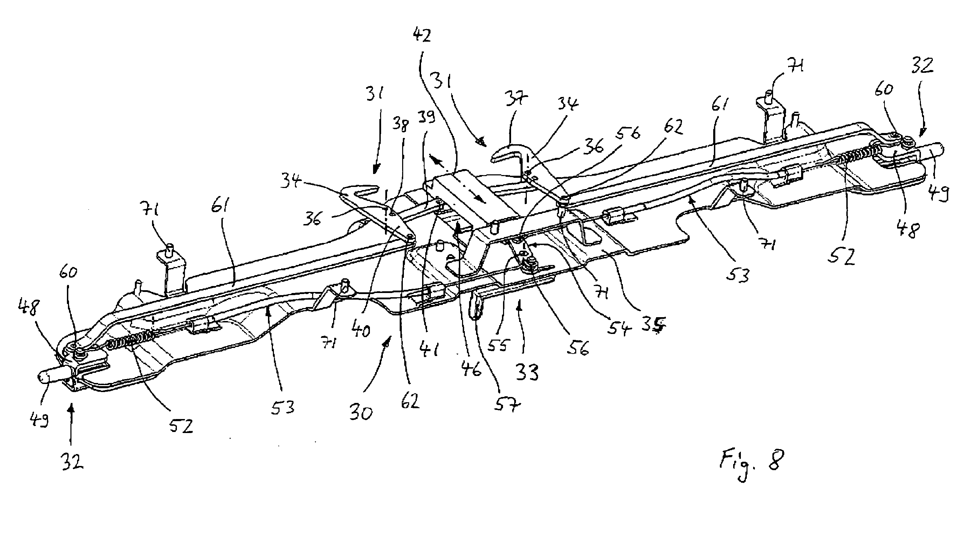

An der Unterseite des Deckels 13 Ist eine Baugruppe 30 angeordnet (Fig. 4, 7 und 8), die eine Verriegelungseinrichtung 31, eine Rasteinrichtung 32 und eine Betätigungseinrichtung 33 zum Betätigen und Verschieben der Deckeleinheit 5 wie auch zum Betätigen der Verriegelungseinrichtung 31 und der Rasteinrichtung 32 aufweist. Die Verriegelungseinrichtung 31 weist zwei Riegelhaken 34 auf, die an einem ein- oder mehrteiligen Tragbauteil 35 der Baugruppe 30 mittels eines jeweiligen Schwenklagers 36 schwenkbar gelagert und beidseits bezüglich einer vertikalen Längsmittelebene durch die Baugruppe 30 bzw. die Deckeleinheit 5 und somit voneinander beabstandet angeordnet sind. Ein vorderes Hakenende 37 jedes Riegelhakens 34 ragt vom Schwenklager 36 nach vorne vor. Eine Anlenkung 38 eines Stellglieds 39 einer Betätigungsmechanik ist an einem bezüglich des Schwenklagers 36 hinteren Abschnitt 40 des Riegelhakens 34 angeordnet. Die Betätigung der zwei Riegelhaken 34 in gleichzeitiger gegenläufiger Verschwenkung erfolgt über die Längsverlagerung einer Innenanlenkung 41 des jeweiligen Stellglieds 39 in Dachlängsrichtung (in Fig. 8 durch Doppelpfeil 42 dargestellt) mittels eines Handgriffs 43, der mittels zweier Lager 44 um eine Querschwenkachse 45 an dem Tragbauteil 35 um etwa 90° verschwenkbar ist, und die zwischengeschaltete Betätigungsmechanik 46 in der Weise, dass bei gegen das Tragbauteil 35 eingeschwenkter horizontaler Ruhestellung des Handgriffs 43 (siehe die Fig. 6 und 7) die beiden Riegelhaken 34 in eine Riegelstellung gegeneinander eingeschwenkt sind und bei nach unten ausgeschwenkter Betriebsstellung des Handgriffs 43 (siehe die Fig. 4, 9 und 10) aus der Riegelstellung in eine Offenstellung ausgeschwenkt sind. In der Riegelstellung sind die Riegelhaken 34 bei geschlossener Deckeleinheit 5 (Fig. 6) an einem jeweils zugeordneten Riegeleingriffsteil 47 am vorderen Rahmenquerteil 29 des Schiebdachrahmens 4 in Riegeleingriff, so dass die Deckeleinheit 5 nicht aus ihrer Schließstellung heraus bewegt werden kann.

Die Rasteinrichtung 32 enthält an den beiden seitlichen Enden des Tragbauteils 35 jeweils einen Raststifthalter 48 mit einem seitlich nach außen vorstehenden Raststift 49. Der Raststifthalter 48 ist an einer am Tragbauteil 35 angebrachten Lagereinheit 50 in Querrichtung oder y-Richtung verschiebbar gelagert und mittels einer Druckfeder 51, die in einer Ausnehmung der Lagereinheit 50 aufgenommen ist, nach außen in eine äußere Raststellung vorgespannt. Jeder Raststifthalter 48 ist über einen eine Feder 52 enthaltenden Bowdenzug 53 mit einem Schwenkhebel 54 verbunden, der um eine am Tragbauteil 35 zentral angeordneten Schwenkachse 55 schwenkbar gelagert ist und die sich bezüglich der Schwenkachse 55 gegenüberliegenden und hiervon gleichmäßig beabstandeten Anbindungspunkte 56 der beiden Bowdenzüge 53 aufweist.

Ein Schiebetaster 57 der Betätigungseinrichtung 33 ist an der Unterseite des Tragbauteils 35 in der Nähe des Handgriffs 43 angeordnet und in Querrichtung oder y-Richtung am Tragbauteil 35 verschiebbar gelagert. Der Schiebetaster 57 ist an den einen Arm des Schwenkhebels 54 beabstandet zur Schwenkachse 55 angekoppelt, z. B. mittels einer Stift- oder Bolzenverbindung an dem Anbindungspunkt 56 des einen Bowdenzugs 53. Wenn der Schiebetaster 57 aus der in Fig. 8 dargestellten Stellung manuell in Quer- oder y-Richtung nach rechts verschoben wird, werden über den dabei verschwenkenden Schwenkhebel 54 und die beiden Bowdenzüge 53 die Raststifthalter 48 mit den Raststiften 49 in synchroner Rückzugsbewegung gegen die Kraft der Druckfedern 51 einwärts gezogen.

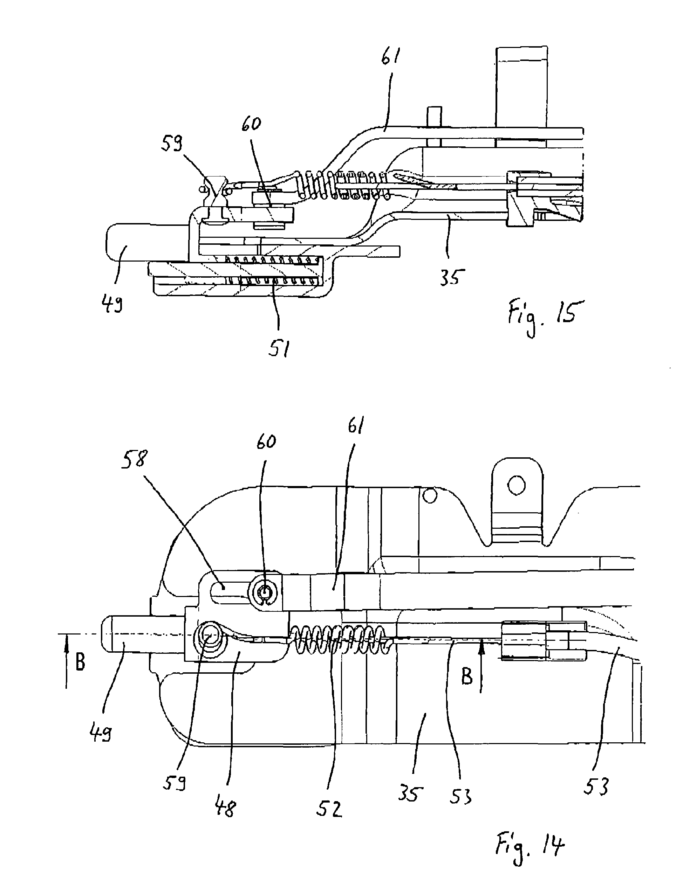

Der Raststifthalter 48 weist ein Langloch 58 auf (siehe Fig. 14), das sich neben der Anbindung 59 des Bowdenzugs 53 bzw. dessen Feder 52 in Bewegungsrichtung des Raststifthalters 48 bzw. in y-Richtung erstreckt. Ein Lagerstift 60 ist in dem Langloch 58 verschiebbar aufgenommen. Der Lagerstift 60 ist an dem äußeren Ende einer Stellstange 61 befestigt und hält als Gleitlagerung die Stellstange 61 relativ zum dem Raststifthalter 48 beweglich, wobei der Bewegungsweg durch die Länge des Langloches 58 begrenzt ist. Die Stellstange 61 erstreckt sich einwärts bis zu dem Riegelhaken 34 und ist mit diesem mittels eines Verbindungsgelenks 62 verbunden, das am Hinterende seines hinteren Abschnitts 40 angeordnet ist.

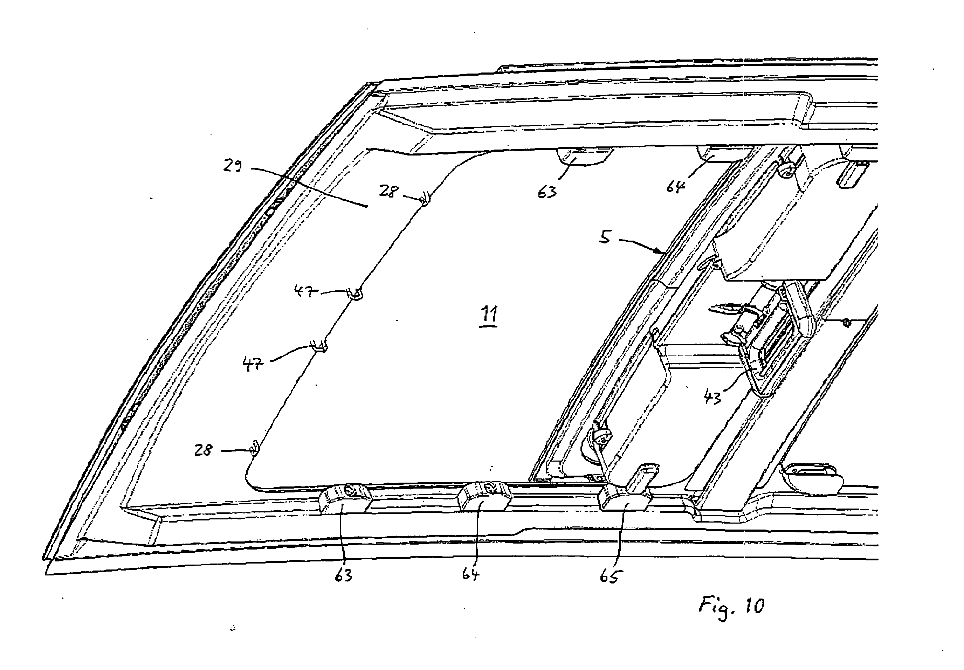

Die Raststifte 49 sind zum Rasteingriff an beispielsweise drei Rasteingriffsteilen 63, 64 und 65 vorgesehen, die jeweils an seitlichen Längsrahmenteilen 66 des Schiebedachrahmens 4 entlang des Bewegungsweges der Deckeleinheit 5 angeordnet sind. Jedes Rasteingriffsteil 63, 64 und 65 weist eine vordere Rastschräge 67 und eine hintere Rastschräge 68 auf, auf denen der Raststift 49 während der Verschiebebewegung der Deckeleinheit 5 entsprechend der Bewegungsrichtung der Deckeleinheit 5 gleiten und sich dabei in Quer- oder y-Richtung einwärts wie auch auswärts bewegen kann. Des weiteren enthält jedes Rasteingriffstell 63, 64 und 65 eine insbesondere zylindrische Rastausnehmung 69 in einer Gleitfläche 70 zwischen den beiden Rastschrägen 67 und 68. Die Rastausnehmung 69 ist derart gebildet, dass der über die Gleitfläche 70 gleitende Raststift 49 aufgrund der Vorspannung durch die Druckfeder 51 in die Rastausnehmung 69 ausfahren kann. In seiner ausgefahrenen Raststellung blockiert der Raststift 49 die Deckeleinheit 5 in dieser Stellung (siehe z. B. Fig. 10 und 11), auch wenn die Deckeleinheit 5 z. B. manuell weiter verschoben werden soll.

Nachfolgend wird die Funktionsweise der Schiebedachvorrichtung beschrieben.

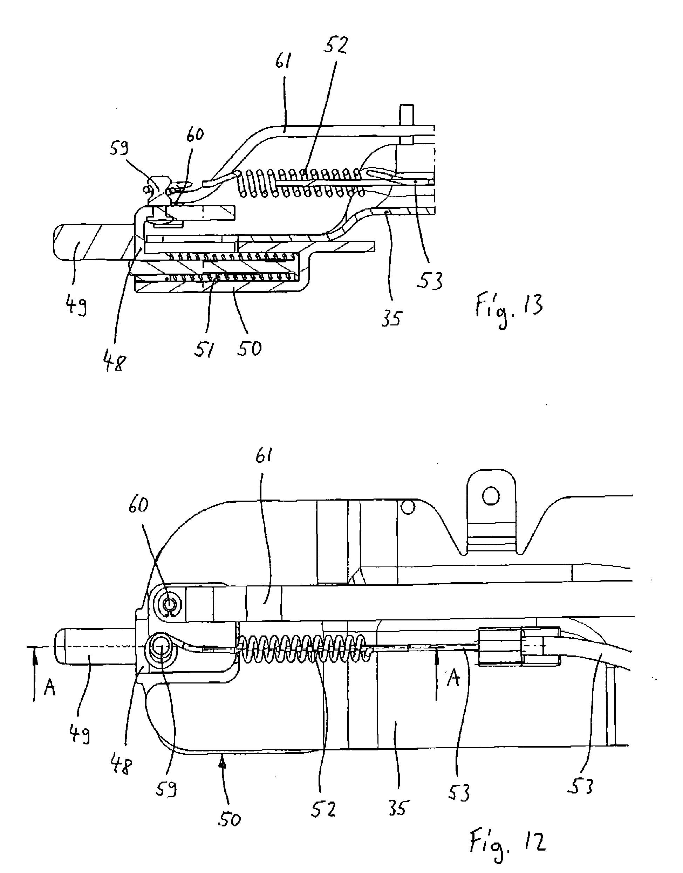

In Schließstellung der Deckeleinheit 5 (siehe Fig. 6) verschließt der Deckel 13 die Dachöffnung 11 bündig mit der umliegenden Dachfläche. Der Handgriff 43 ist in seine Ruhestellung verschwenkt und über die Betätigungsmechanik 46 sind die beiden Riegelhaken 34 in ihre Riegelstellungen mit Riegeleingriff an den Riegeleingriffsteilen 47 verschwenkt. Die Stellstangen 61 sind über die Riegelhaken 43 nach außen bewegt worden und drücken im Zwangseingriff am Außenende des Langloches 58 den Raststifthalter 48 mit dem Raststift 49 in eine maximale äußere Stellung (siehe Stellung der Fig. 12 und 13, Raststift in Fig. 6 nicht dargestellt). In dieser Stellung hat der Raststifthalter 48 über den Bowdenzug 53 den Schwenkhebel 54 und/oder den Schiebetaster 57 gegen einen Anschlag bewegt und darüber hinaus die Feder 52 unter Spannungsaufbau expandiert. In dieser Stellung ist gemäß dem Ausführungsbeispiel ein Rasteingriff mit Rasteingriffsteilen nicht vorgesehen. Der Deckel 13 ist am Deckelrahmen 14 mittels der Haken 20 an den Halterungen 22 festgelegt und mittels der zurückgeschwenkten Riegelteile 25 und den Riegelhaken 26 mit Eingriffsteilen des Deckels 13 in Eingriff, so dass der Deckel 13 am Deckelrahmen 14 gesichert gehalten ist.

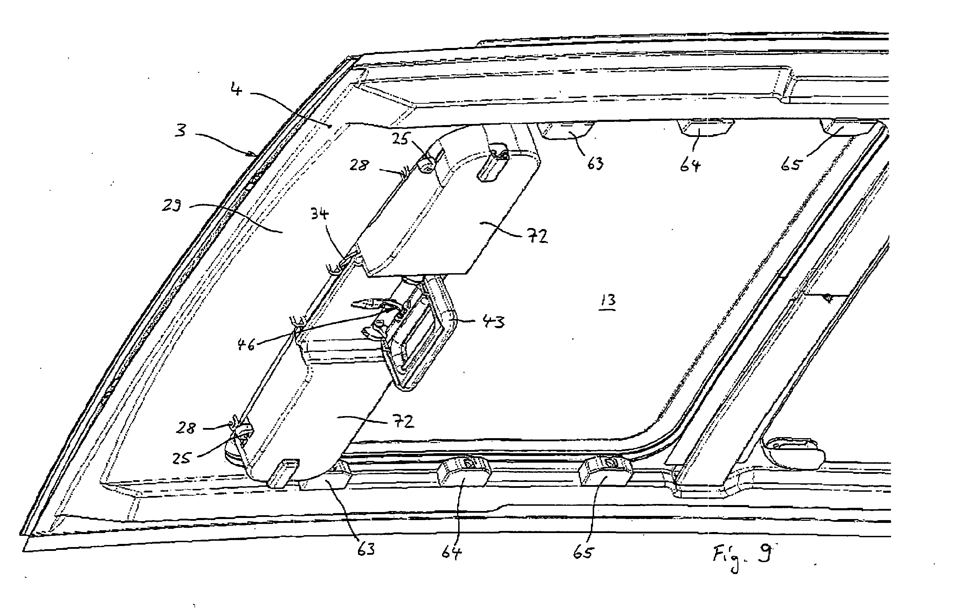

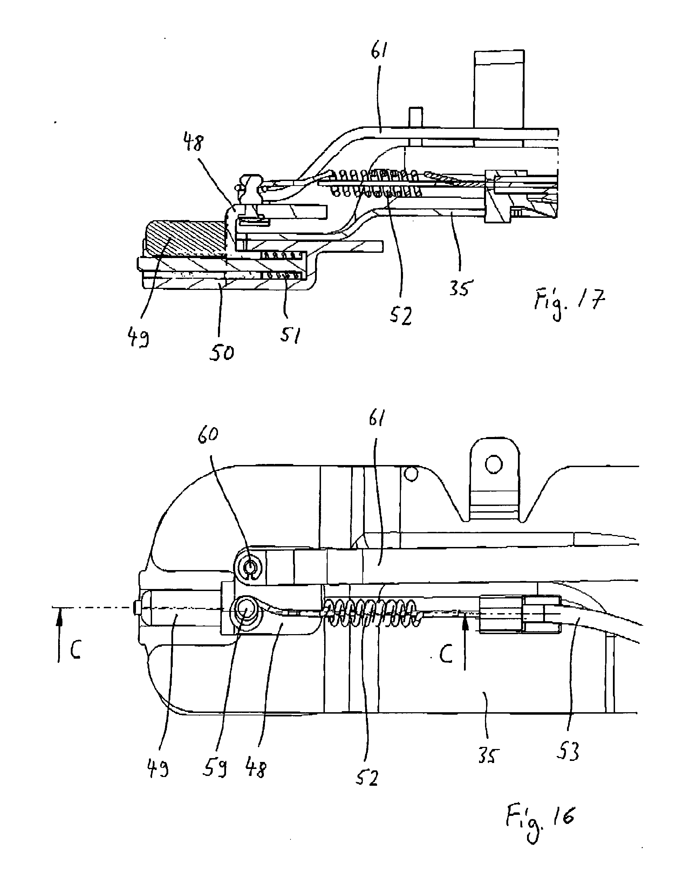

Zum Öffnen der Schiebedachvorrichtung 3 wird zunächst der Handgriff 43 nach unten geschwenkt (siehe Fig. 9), wodurch die Riegelhaken 34 in ihre Offenstellung verschwenkt werden und die Deckeleinheit 5 zum Längsverschieben entlang der Führungsschienen 9 und 10 freigeben. Außerdem werden die Stellstangen 61 bis in die in den Fig. 14 und 15 dargestellte Stellung nach innen gezogen, wobei anfangs der Raststifthalter 48 durch die Kraft der gespannten Feder 52 dem Lagerstift 60 der Stellstange 61 folgt, der am Außenende des Langloches 58 anliegt, bis sich die Feder 52 auf ihre ungedehnte und federkraftfreie Länge verkürzt hat und keine Rückzugskraft auf den Raststifthalter 48 ausübt. Der Lagerstift 60 der Stellstange 61 befindet sich dann am Innenende des Langloches 58 des Raststifthalters 48, der durch die Druckfeder 51, deren Federkraft geringer ist als die Federkraft der Feder 52 des Bowdenzugs 53, weiterhin nach außen vorgespannt ist. In dieser Stellung ist der Raststift 49 in einer Bereitschaftsstellung, in der er beim rückwärts gerichteten manuellen Verschieben der Deckeleinheit 5 in Kontakt mit der vorderen Rastschräge 67 kommt und von dieser gegen die Kraft der Druckfeder 51 bis auf das Niveau der Gleitfläche 70 einwärts verlagert wird. Der Raststifthalter 48 bewegt sich dabei relativ zum ruhenden Lagerstift 60, der im Langloch 58 wieder gegen dessen Außenende hin bewegt wird (Stellung des Raststifthalters 48 kurz vor der in den Fig. 16 und 17 dargestellten Einfahrstellung). Der Bowdenzug 53 bildet mit der entspannten Feder 52 eine weitgehend drucksteife Einheit und wird vom Raststifthalter 48 einwärts verlagert, wodurch er den Schwenkhebel 54 verschwenkt und der Schiebetaster 57 gleichfalls verschoben wird.

Bei der weiteren Verschiebebewegung der Deckeleinheit 5 erreicht der Raststift 49 die Rastausnehmung 69, in die er durch die Federkraft der Druckfeder 51 ausgefahren und hineingedrückt wird. Die Rasteinrichtung 32 nimmt dabei wieder die in den Fig. 14 und 15 dargestellte Stellung ein und der Raststift 49 blockiert in seiner ausgefahrenen Raststellung die Deckeleinheit 5 gegen weiteres Verschieben (Stellung gemäß den Fig. 10 und 11). Über den gleichfalls verlagerten Bowdenzug 53 ist der Schwenkhebel 54 wieder zurückgeschwenkt worden und der Schiebetaster 57 befindet sich ebenfalls wieder in seiner Ausgangsstellung.

Um die Deckeleinheit 5 mittels des Handgriffs 43 weiter zu verschieben, wird der nahe dem Handgriff 43 angeordnete Schiebetaster 57 manuell betätigt bzw. verschoben, wodurch über den verschwenkenden Schwenkhebel 54 und den Bowdenzug 53 mit der Feder 52 der Raststift 49 aus der Rastausnehmung 69 herausgezogen wird. Nachdem der Rasteingriff beendet ist, kann die Deckeleinheit 5 mittels des Handriffs 43 weiter verschoben werden. Die Betätigung des Schiebetasters 57 kann beendet werden.

Der beschriebene Vorgang wiederholt sich an jedem der folgenden Rasteingriffsteile 64 und 65. Um die Deckeleinheit 5 ohne die beschriebene Bewegungsunterbrechung bzw. Verrastung an zumindest einem der Rasteingriffsteile 63, 64 oder 65 in die Offenstellung gemäß Fig. 10 und 11 zu verfahren, kann während der Öffnungsbewegung schon beim Erreichen des ersten Rasteingriffsteils 63 der Schiebetaster 57 vollständig betätigt bzw. verschoben werden und in dieser Stellung gehalten werden, so dass die Rasteinrichtung 32 und insbesondere der Raststift 49 die in den Fig. 16 und 17 dargestellte zurückgezogene Stellung einnimmt, in der keine Rastung erfolgen kann.

Zum vollständigen Freilegen der Dachöffnung 11 wird die Deckeleinheit 5 in die in Fig. 10 dargestellte Stellung verschoben. Wenn sich der Schiebetaster 57 ohne manuelle Betätigung in seiner Ausgangsstellung befindet, kann der Raststift 49 in die Rastausnehmung 69 des hinteren Rasteingriffsteils 65 ausfahren und damit die Deckeleinheit 5 in ihrer Offenstellung verrastet halten. Beim Einschwenken des Handgriffs 43 in seine horizontale Ruhestellung (Fig. 11) werden über die verschwenkenden Riegelhaken 34 und die Stellstangen 61 die beiden Raststifte 49 in ihre maximale Raststellung ausgefahren (Stellung gemäß Fig. 12 und 13).

Zum zumindest teilweisen Schließen der Dachöffnung 11 wird der Handgriff 43 herabgeschwenkt und mittels des Handgriffs 43 wird die Deckeleinheit 5 nach vorne verschoben. Wenn der Schiebetaster 57 zunächst nicht betätigt wird, wird an dem hinteren Rasteingriffstell 65 eine Verrastung erfolgen, die durch Betätigung des Schiebetaster 57 in der beschriebenen Weise aufgehoben werden kann. Wenn die Deckeleinheit 5 in ununterbrochener Schiebebewegung in ihre vordere Schließstellung bewegt werden soll, so wird sogleich der Schiebetaster 57 betätigt und der Raststift 49 in seiner zurückgezogenen Stellung gehalten.

Die Rasteinrichtung 32 ermöglicht auch eine Blockierung der Deckeleinheit 5, wenn diese in einer Teilöffnungsstellung ohne Verrastung angeordnet ist und eine hohe Beschleunigung wie z. B. bei einem Auffahrunfall auftritt, die die Deckeleinheit 5 ruckartig bewegt. Beim Erreichen des nächsten Rasteingriffsteils wird eine Verrastung erfolgen, die eine Weiterbewegung der Deckeleinheit 5 verhindert.

Das Freilegen einer Dachöffnung kann auch durch Entfernen des Deckels 13 von dem in Schließstellung angeordneten Deckelrahmen 14 erfolgen. Ausgehend von der Schließstellung der Deckeleinheit 5 gemäß Fig. 6 werden die beiden Riegelteile 25 aus dem Riegeleingriff am Deckel 13 gelöst und in Riegeleingriff am Eingriffsteil 28 des vorderen Rahmenquerteils 29 des Schiebedachrahmens 4 gebracht bzw. insbesondere manuell verschwenkt. Der Deckelrahmen 14 ist somit am Schiebedachrahmen 4 festgelegt und kann nicht mehr an den Führungen 9 und 10 verlagert werden. Beim Herabschwenken des Handgriffs 43 werden die Riegelhaken 34 aus ihrer Verriegelung an den Riegeleingriffsteilen 47 gelöst. Damit kann der Deckel 13 vom Deckelrahmen 14 abgenommen werden. Die gesamte Baugruppe 30 zur Betätigung, Verriegelung und Rastung wird gleichfalls mit dem Deckel 13 entfernt, so dass die freigelegte Deckelrahmenöffnung 15 ebenfalls eine vergleichsweise große Dachöffnung bereitstellt.

Das Tragbauteil 35 der Baugruppe 30 ist über mehrere Verbindungen wie z. B. Schraubverbindungen 71 mit dem Deckel 13 an seiner Unterseite verbunden. Der Deckel 13 ist z. B. aus einem Kunststoffmaterial oder einem Kompositmaterial hergestellt, an dem Schraubverbindungen möglich sind. Die Baugruppe 30 kann eine ein- oder mehrteilige Abdeckung 72 aufweisen.

Die Feder 52 am Bowdenzug 53 ist zum Toleranzausgleich in der mechanischen Kette zwischen dem Raststifthalter 48 und dem Schwenkhebel 54 vorgesehen.

Die in der Beschreibung und anhand des Ausführungsbeispiels sowie in den Figuren offenbarten einzelnen Merkmale der Erfindung können in beliebigen technisch zweckmäßigen Anordnungen und Gestaltungen mit dem Erfindungsgegenstand in seiner allgemeinen Form kombiniert werden.

**Bezugszeichenliste**

| | | | |
|---|---|---|---|
| 1 | Fahrzeugdach | 28 | Eingriffsteil |
| 2 | Dachrahmenstruktur | 29 | vorderes Rahmenquerteil |
| 3 | Schiebedachvorrichtung | 30 | Baugruppe |
| 4 | Schiebedachrahmen | 31 | Verriegelungseinrichtung |
| 5 | Deckeleinheit | 32 | Rasteinrichtung |
| 6 | Seitenrand | 33 | Betätigungseinrichtung |
| 7 | vorderer Lager- und Ausstellhebel | 34 | Riegelhaken |
| | | 35 | Tragbauteil |
| 8 | hinterer Lager- und Ausstellhebel | 36 | Schwenklager |
| | | 37 | vorderes Hakenende |
| 9 | vordere Führungsschiene | 38 | Anlenkung |
| 10 | hintere Führungsschiene | 39 | Stellglied |
| 11 | Dachöffnung | 40 | hinterer Abschnitt |
| 12 | hinteres Dachflächenteil | 41 | Innenanlenkung |
| 13 | Deckel | 42 | Doppelpfeil |
| 14 | Deckelrahmen | 43 | Handgriff |
| 15 | Deckelrahmenöffnung | 44 | Lager |
| 16 | vorderes Schwenklager | 45 | Querschwenkachse |
| 17 | hinteres Schwenkiager | 46 | Betatigungsmechanik |
| 18 | Führungs- und Steuerkulisse | 47 | Riegeleingriffsteil |
| 19 | Führungs- und Steuerkulisse | 48 | Raststifthalter |
| 20 | Halterung | 49 | Raststift |
| 21 | Lagerstift | 50 | Lagereinheit |
| 22 | Haken | 51 | Druckfeder |
| 23 | vorderes Deckelrahmenquerteil | 52 | Feder |
| | | 53 | Bowdenzug |
| 24 | Lagerzapfen | 54 | Schwenkhebel |
| 25 | Riegelteil | 55 | Schwenkachse |
| 26 | Riegelhaken | 56 | Anbindungspunkt |
| 27 | Riegelhaken | 57 | Schiebetaster |
| 58 | Langloch | 66 | Längsrahmentell |
| 59 | Anbindung | 67 | vordere Rastschräge |
| 60 | Lagerstift | 68 | hintere Rastschräge |
| 61 | Stellstange | 69 | Rastausnehmung |
| 62 | Verbindungsgelenk | 70 | Gleitfläche |
| 63 | Rasteingriffsteil | 71 | Schraubverbindung |
| 64 | Rasteingriffsteil | 72 | Abdeckung |
| 65 | Rasteingriffsteil | | |

## Patentansprüche

1. Fahrzeug-Schiebedachvorrichtung (3) mit einer Deckeleinheit (5), die mittels einer Lagereinrichtung (7, 8) an Führungen (9, 10) der Schiebedachvorrichtung (3) verschiebbar gelagert und zwischen einer eine Dachöffnung (11) abdeckenden Schließstellung und zumindest einer Offenstellung verstellbar ist,
**dadurch gekennzeichnet,**
**dass** mittels einer manuell zu bedienenden Betätigungseinrichtung (33) eine Verriegelungseinrichtung (31), die die Deckeleinheit (5) zumindest in ihrer Schließstellung lösbar verriegelt, und eine Rasteinrichtung (32) betätigbar ist, mittels der die Deckeleinheit (5) zumindest in unterschiedlichen Öffnungsstellungen gegen Verschieben relativ zu den Führungen (9, 10) rastbar ist.

2. Schiebedachvorrichtung nach Anspruch 1,
**dadurch gekennzeichnet, dass** die entlang der Führungen (9, 10) bewegte Deckeleinheit (5)
entweder durch Rasteingriff der sich in Bereitschaftsstellung befindenden Rasteinrichtung (32) festlegbar
oder durch die durch manuelle Betätigung inaktiv gehaltene Rasteinrichtung (32) frei verschiebbar ist.

3. Schiebedachvorrichtung nach Anspruch 1 oder 2,
**dadurch gekennzeichnet, dass** die Betätigungseinrichtung (33) an der Deckeleinheit (5) angeordnet ist und einen verstellbar gelagerten Handgriff (43) aufweist, der in seiner Ruhestellung zumindest einen Riegel oder Riegelhaken (34) der Verriegelungseinrichtung (31) in Riegelstellung an einem Riegeleingriffsteil (47) hält und in seiner Betätigungsstellung den Riegel oder Riegelhaken (34) aus seiner Verriegelung gelöst hat.

4. Schiebedachvorrichtung nach einem der Ansprüche 1 bis 3,
**dadurch gekennzeichnet, dass** die Rasteinrichtung (32) zumindest ein Rastglied (49) aufweist, das an der Deckeleinheit (5) bewegbar gelagert und am Seitenrand (6) der Deckeleinheit (5) an zumindest einem am Schiebedachrahmen (4) angeordneten Resteingriffsteil (63, 64, 65) durch Vorspannung in Rasteingriff verstellbar ist.

5. Schiebedachvorrichtung nach Anspruch 4,
**dadurch gekennzeichnet, dass** das Rastglied (49) von der Betätigungseinrichtung (33) mittels einer insbesondere einen Bowdenzug (53) aufweisenden Verstelleinheit in eine inaktive Rückzugsstellung verstellbar ist.

6. Schiebedachvorrichtung nach Anspruch 5,
**dadurch gekennzeichnet, dass** die Verstelleinheit bzw. der Bowdenzug (53) eine Feder (52) enthält.

7. Schiebedachvorrichtung nach einem der Ansprüche 1 bis 6,
**dadurch gekennzeichnet, dass** die Rasteinrichtung (32) bzw. die Verstelleinheit von einem Rastbetätigungsteil (57) der Betätigungseinrichtung (33) bedienbar ist, das zur Einhandbedienung beim manuellen Verschieben der Deckeleinheit (5) angeordnet ist.

8. Schiebedachvorrichtung nach einem der Ansprüche 4 bis 7,
**dadurch gekennzeichnet, dass** das Rastglied (49) in einer Bereitschaftsstellung bei bewegter Deckeleinheit (5) von einer Rastschräge (67, 68) am Rasteingriffsteil (63, 64, 65) gegen eine Vorspannkraft einfahrbar ist und durch die Vorspannkraft in Rasteingriff am Rasteingriffsteil (63, 64, 65) ausfahrbar ist.

9. Schiebedachvorrichtung nach einem der Ansprüche 4 bis 8,
**dadurch gekennzeichnet, dass** das Rastglied (49) oder ein Rastgliedhalter (48) mittels einer von der Betätigungseinrichtung verstellbaren Rastverstellmechanik, insbesondere durch Verschwenken des Handgriffs (43), einerseits in eine vollständig ausgefahrene Raststellung ausfahrbar und andererseits zur Bewegung in eine eingefahrene Bereitschaftsstellung freigebbar ist.

10. Schiebedachvorrichtung nach Anspruch 9,
**dadurch gekennzeichnet, dass** eine Stellstange (61) der Rastverstellmechanik den verstellbaren Riegel oder Riegelhaken (34) mit dem Rastglied (49) bzw. dem Rastgliedhalter (48) koppelt.

11. Schiebedachvorrichtung nach Anspruch 10,
**dadurch gekennzeichnet, dass** die Stellstange (61) an einer Kulisse oder einem Langloch (58) des Rastgliedhalters (48) gelagert ist und in der Bereitschaftsstellung eine durch die Kulisse bzw. das Langloch (58) begrenzte Verstellbewegung des Rastgliedhalters (48) zulässt.

12. Schiebedachvorrichtung nach einem der Ansprüche 1 bis 11,
**dadurch gekennzeichnet, dass** die Verriegelungseinrichtung (31) und die Rasteinrichtung (32) sowie die Betätigungseinrichtung (33) eine Baugruppe (30) bilden, die an der Deckeleinheit (5) oder an einem Deckel (13) der Deckeleinheit, (5) angeordnet ist.

13. Schiebedachvorrichtung nach Anspruch 12,
**dadurch gekennzeichnet, dass** die Baugruppe (30) eine Tragstruktur (35) aufweist, die an der Unterseite des Deckels (13), insbesondere nahe des Vorderrandes des Deckels (13), angebracht ist.

14. Schiebedachvorrichtung nach einem der Ansprüche 1 bis 13,
**dadurch gekennzeichnet, dass** die Deckeleinheit (5) einen Deckelrahmen (14) aufweist, an dem der Deckel (13) mit der daran angebrachten Baugruppe (30) zum Freigeben einer Dach- oder Deckelrahmenüffnung (15) lösbar angebracht ist.
